Europäisches Patentamt

European Patent Office

Office européen des brevets

(19)

(11) Publication number: **0 369 098**

**A1**

(12) **EUROPEAN PATENT APPLICATION**

(21) Application number: **89105177.3**

(22) Date of filing: **22.03.89**

(51) Int. Cl.⁵: **C04B 41/89, C04B 38/06, B01D 39/20**

(30) Priority: **17.11.88 ES 8803503**

(43) Date of publication of application:
**23.05.90 Bulletin 90/21**

(84) Designated Contracting States:
**DE ES FR IT**

(71) Applicant: **HISPANO QUIMICA S.A.**
**Paseo Zona Franca 61-67**
**E-08004 Barcelona(ES)**

(72) Inventor: **Celades Colom, Roberto**
**Muntaner, 326**
**Barcelona(ES)**
Inventor: **Velasco Diez, Miguel-Angel**
**Avda. General Vigon, 55**
**Burgos(ES)**

(74) Representative: **Duran Moya, Carlos et al**
**Paseo de Gracia, 101**
**E-08008 Barcelona(ES)**

(54) **Process for the preparation of a reinforced ceramic foam.**

(57) Process for the preparation of a reinforced ceramic foam, showing modified surface properties, which is appropriate for capturing the slag and impurities in the filtration of metals, characterized by comprising the impregnation of an already existing ceramic foam or a freshly prepared ceramic foam according to conventional methods, in which, after the sinterization and cooling down, the impregnation is carried out under vacuum, by submersion in a colloidal solution of refractory oxide containing refractory powder, subsequently proceeding to dripping and drying out at a temperature comprised between 90 and 150 º C in an air flow dryer with subsequent sinterization at a temperature comprised between 1200 º C and 1600 º C during 5 hours and, after cooling down, a surface impregnation is carried out with a film-forming acrylic polymer, proceeding subsequently to its final drying.

FIG. 2

# PROCESS FOR THE PREPARATION OF A REINFORCED CERAMIC FOAM

The use of ceramic foams as backing for catalyzer substances, steel filtration, hot gas filtration, etc. is already known from prior techniques. British Patent nº 923.862 issued on 9th March 1960, discloses the preparation of similar foams. Many other Patents have been issued introducing variations, specially on the detailed processes, type of agglomerating agents to be used, etc., although all of them have in common the use of a polyurethane foam as starting material.

The most conventional method, according to the prior techniques, consists in soaking an open pore polyurethane sponge with a refractory paste, to allow the sponge to dry and subsequently to heat it up in order to burn out the organic material, obtaining in this way a kind of replica of the organic structure used as a support. Subsequently, a sinterizing process is carried out at a temperature comprised between 1000 º and 1600 º C.

with this process according to prior disclosure, void spaces remain in the walls of the structure corresponding to the organic matter which has been burnt out, this entailing the possibility of microcracks to appear. This has as a consequence that the structure of the foam may become weak, appearing some problems of surface fragility during the handling of the filter.

The present invention is aimed at the elimination of the above drawbacks by means of a further treatment with a colloidal dispersion of a refractory oxide as alumina or silica containing in suspension a high resistence refractory oxide of the type of tabular alumina, partially stabilized zirconite and other refractory materials, as well as an organic or inorganic suspension agent.

This invention permits as well the ellimination of micropores in the structure of the refractory foam, as the size of the particles allows a sufficient penetration.

The treatment according to the present invention is carried out by means of submersion of the ceramic foam after sinterization and the application of a moderate vacuum of 13-14 mm. In this way, when removing the vacuum action, the colloidal suspension of silica containing the refractory oxide penetrates in the voids of the structure and, at the same time, fills up the microcracks which could eventually exist. The subsequent step consists in a drying action with temperatures comprised, approximately, between 90 and 150 º C, by which, the colloidal silica sol is transoformed into silica gel retaining the refractory powder, proceeding subsequently to the sinterization of the whole structure at a temperature comprised between 1200 and 1600 º C.

In a ceramic foam of the type to be used for the filtration of molten metals, for instance 15 x 40 x 40 mm., the total volume is of 21,6 cm$^3$ of which 3 cm$^3$ are due to the polyurethane skeleton or frame, giving ground therefore to voids after burning out. Therefore, 13-14% of void space is formed between the ceramic walls, which voids can be filled up according to the present invention.

The weight of a ceramic filter of the type according to this invention is of about 22 g. in case of alumina, and by application of refractory powder and colloidal silica, there is an absortion of around 5 g., which, after drying at controlled conditions of temperature and time, determine a final weight of 24 g. There has been therefore, an increase of 2 g. accounting for 9% approximately of reinforcing and covering material. This addition reinforces remarkably the structure of the filter, giving ground at the same time to a surface cover which modifies the affinity fo the surface. Obviously, the increase in the weight will depend on the specific weight of the refractory powder being used.

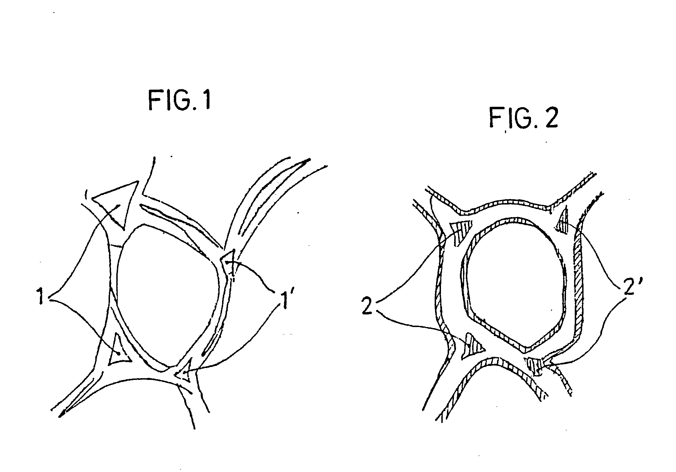

Figures 1 and 2 show as an example the difference before and after the treatment.

Now, referring to figure 1, 1 and 1' show void spaces, while in figure 2, 2 and 2' show filled areas or coatings.

With the aim of obtaining a higher resistence in the handling during the transport and installation of the filter, and in order to prevent completely surface fragility, after cooling a treatment is carried out with an organic polymer, preferably an acrylic film-forming polymer. The treatment is carried out by surface impregnation by means of spray or by means of sponge rollers impregnated with the polymer, with subsequent drying at a temperature comprised between 80 and 100 º C, with a flow of air. The application can also be carried out in a continuous way taking profit of the residual heat during the cooling down of the ceramic foam.

The minimum temperature for the formation of the film of the original polymer must be preferably comprised between 0 and 5 º C, although higher temperatures can be used provided that the drying is carried out in film-forming conditions.

The ceramic foam, after receiving the treatment according to the present process, shows higher characteristics than those shown by the untreated foam products, specially concerning its performance in applications as filter for molten metals, etc.

The ceramic foam according to this invention permits the pouring of metals at higher temperatures, as it will stand to metallostatic pressure. It also allows long duration filtration operations, as it has higher physical and chemical resistence, permitting to carry out filtration processes in continuous casting.

Another objective of the present invention consists in the modification of the affinity of the surface in respect to slag-type microinclusions in the metals, which can only be eliminated by affinity with the surface of the filter.

The process of this invention permits the manufacture of a refractory compound with a modified surface to make it more appropriate for the capturing of the impurities contained in the molten metals.

In working conditions comprised between 900 $^{\circ}$C for aluminium and 1600 $^{\circ}$ C for steel, the organic polymer which has permitted the handling in cold state without any surface fragility will disappear completely at the beginning of the filtration without any further consequences.

The slag and inclusions remain strongly adhered to the walls of the filter, thus being eliminated from the molten metal.

This type of filtration operates by affinity filtration, and wettability of the different components passing through the filter, rather than by physical sieving effect. This permits the elimination of a substantial part of the slag and inclusions present in form of microparticles without opposing an excessive braking action to the passage of the metal.

This principle explains the importance of the compositon of the surface of the ceramic foam, which may be modified according to the present invention. The product my be considered as a ceramic foam of "core- shell" type, with a refractory skeleton or frame of a given first compostion and the surface with a second composition.

## MATERIALS TO BE EMPLOYED

### Refractory products

The starting material may consist in a ceramic foam obtained by conventional methods already existing on the market, or by preparing the ceramic foam starting from an open pore polyurethane foam, with subsequent covering with a refractory paste of the type comprising alumina, chromite, stabilized zirconium oxide, boron nitrate, silicium nitrate, aluminium silicate (mullite), corundum, silicium carbide, etc.

The preferable grain size corresponds to less than 300 mesh.

A controlled drying action is carried out and subsequently a heating action takes place out ar-

ound 500 $^{\circ}$ C to burn the organic material out with a sinterization from 1000 to 1600 $^{\circ}$ C as disclosed in many references known in this field.

## Binding products:

As binding products for the refractory structure, colloidal silica solutions may be used, as well as active alumina, aluminium chlorine hydroxid, colloidal chromium phosphate, aliminium phosphate, etc.

## Colloidal silica solution:

It is a colloidal silica solution containing between 15 and 40% of $SiO_2$ with a $SiO_2/Na_2O$ ratio of around 100. This product is obtained starting from sodium silicate, with complete deionization and polymerization of silicic acid up to obtaining sizes of particles comprised between 7 and 40 m$\mu$ and concentrations from 15 to 50%. As examples the type Hispasil 1731 or 1730 may be mentioned (a product from HISPANO-QUIMICA S.AS.).

## Organic polymer:

Any film-forming polymer, preferably of the acrylic copolymer type at a concentration comprised between 35 and 50% with particle sizes comprised between 80 mm. and 150 mm., with a film-formation temperature comprised between 0 and 25 $^{\circ}$ C may be used. As examples, the Acronet 5098 or 5150 types may be mentioned (from HISPANO-QUIMICA S.A.).

## MANUFACTURING PROCESS

If the starting material consists in an already existing ceramic foam, this will be treated by submersion in the colloidal silica dispersion containing the refractory powder in a container which receives a vacuum action to eliminate the ocluded air. After establishing normal pressure again, the liquid fraction will fill up all the cracks and micropores.

The rest of the dispersion will be eliminated by centrifugation or by any other means, proceeding to its oven-drying with air flow. Subsequently, the temperature will be increased to 1300-1500 $^{\circ}$ C to proceed to the sinterization. Subsequently, the surface will be treated with the acrylic film-forming polymer.

When starting from an open pore polyurethane foam, the conventional method will be used, by soaking with the ceramic paste, dripping, drying, elimination of the organic components and further sinterization. After cooling down, the above mentioned treatment will be carried out.

The following examples of this invention are in no way to be construed as limitations of the same, having only illustrative purposes given the fact that the refractory mixtures and its corresponding agglomerating products may vary according its application to the filtration of aluminium, bronze, iron, etc.

## EXAMPLE 1

When starting from an already sinterized ceramic foam, this will be treated with a refractory oxide suspension, in this case 300 mesh alumina. The proportions are the following:
100g. of a 30% solution of colloidal silica
(Hispasil 30)
250 g. of 300 mesh tabular alumina
0,5 g. of XB23 suspension biopolymer

The parts are submerged within an enclosed vessel, placed on a mesh, proceeding to the application of a 20 mm. Vacuum during 30 min. The suspension will be maintained by recirculation shaking. The vacuum action will be eliminated proceeding to controlled centrifugation for the separation of the excess of dispersion.

The drying will be carried out under a flow of air with a constant relative humidity of 90% at 100 ℃. Subsequently, the parts will be placed on the trays of the carriage, proceeding to sinterization by means of a gas fired bell type furnace, taking 7 hours to reach 1600 ℃. The temperature will be maintained for 5 hours with a subsequent 4 hour cooling period. Subsequently, surface impregnation will be carried out by passage through flexible rollers with a solution of film-forming acrylic polymer of the Acronet 5098 type with a contents of 20% solid matter, proceeding subsequently to final drying.

## EXAMPLE 2

Instead of starting from a ceramic foam already existing in the market, a ceramic foam may be produced starting from a 50 x 50 x 20 mm. polyurethane foam with a weight of 5 g.

It will be submerged in a ceramic paste constituted by:

45 parts of water
35 parts of alumina
10 parts of 30% colloidal silica
9 parts of aluminium phosphate
1 part of silica aluminate as thickener

After impregnation and dripping out, the weight is of 40 g. Subsequently, a gradual drying action is carried out with elimination of the organic matter at 500 ℃ and sinterization at 1300 ℃. The final weight is of 25 g.

Once cool, the treatment process accoridng to example 1 will be carried out, obtaining a ceramic foam appropriate for the filtration of metals, not suffering from surface fragility, showing a higher resistence and affinity for the slag comprised in molten metals.

Everything which does not affect, alter, change or modify the essentiality of the above process will be considered as variable matters to the effects of the present invention.

## Claims

1.- Process for the preparation of a reinforced ceramic foam, showing modified surface properties, which is appropriate for capturing the slag and impurities in the filtration of metals, characterized by comprising the impregnation of an already existing ceramic foam or a freshly prepared ceramic foam according to conventional methods, in which, after the sinterization and cooling down, the impregnation is carried out under vacuum, by submersion in a colloidal-solution of refractory oxide containing refractory powder, subsequently proceeding to dripping and drying out at a temperature comprised between 90 and 150 ℃ in an air flow dryer with subsequent sinterization at a temperature comprised between 1200 ℃ and 1600 ℃ during 5 hours and, after cooling down, a surface impregnation is carried out with a film-forming acrylic polymer, proceeding subsequently to its final drying.

2.- Process for the preparation of a reinforced ceramic foam, according to claim 1, in which the impregnating agent is constituted by a mixture of a colloidal solution of 30% silica and a refractory powder in up to 40 to 80% solid matter, depending of the specific surface and specific weight, in order to maintain the pertinent flowability.

3.- Process for the preparation of a reinforced ceramic foam, according to any of the previous claims, in which the impregnation is carried out at 15-20 mm. Hg during 30 min., proceeding subsequently to interrupt the vacuum effect and subsequent dripping out.

4.- Process for the preparation of a reinforced ceramic foam, according to any fo the previous claims, in which the drying is carried out in a drying chamber with assisted air flow during 4 hours at a temperature comprised between 90 and 150 ℃, with final sinterization at a temperature of 1200 ℃-1600 ℃ during 5 hours.

5.- Process for the preparation of a reinforced ceramic foam, according to any of the previous claims, in which after the sinterization, the surface impregnation is carried out by means of rollers or spray with a film-forming acrylic copolymer, with subsequent drying.

6.- Process for the preparation of a reinforced ceramic foam of the "core-shell" type with an active surface.

FIG.1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A- 554 987 (EUGEN STICH)<br>* Claim 1; page 1, lines 34-60 *<br>--- | 3 | C 04 B 41/89<br>C 04 B 38/06<br>B 01 D 39/20 |
| A | DE-A-3 511 413 (BMC ACRYLCHEMIE)<br>* Abstract; page 8, line 14 - page 9, line 29 *<br>--- | 1 | |
| A | WO-A-8 701 655 (LYDALL INC.)<br>* Claims 1,2,5,6; page 13, line 5 - page 14, line 6; page 8, lines 19-24; page 19, lines 11-30 *<br>--- | 1-2,4-5 | |
| Y | GB-A-1 033 560 (PITTSBURGH PLATE GLASS CO.)<br>* Page 11, line 128 - page 12, line 25 * | 1-2,4 | |
| A | | 3 | |
| | --- | | |
| Y | US-A-4 302 502 (BRIDGESTONE TIRE CO. LTD)<br>* Abstract; column 5, lines 5-37 * | 1-2,4 | |
| X | | 6 | TECHNICAL FIELDS<br>SEARCHED (Int. Cl.5) |
| | --- | | |
| A | US-A-3 451 841 (GENERAL MOTORS)<br>* Claims 1,4,5; column 3, lines 5-35 *<br>----- | 1-2 | C 04 B 41<br>C 04 B 38<br>B 01 D 39 |

The present search report has been drawn up for all claims

| Place of search | Date of completion of the search | Examiner |
|---|---|---|
| THE HAGUE | 28-09-1989 | OLSSON S.A. |